# EUROPEAN PATENT SPECIFICATION

(11) **EP 1 192 479 B1**
(45) Date of publication and mention of the grant of the patent: **29.05.2013**
(21) Application number: 00917581.1
(22) Date of filing: 15.03.2000
(51) Int. Cl.: G01T 1/20, G01T 1/24, G01T 1/164

(54) **DEVICE AND METHOD RELATING TO X-RAY IMAGING**
GERÄT UND VERFAHREN ZUR RÖNTGENSTRAHLUNGSABBILDUNG
DISPOSITIF ET PROCEDE D'IMAGERIE PAR RAYONS X

(30) Priority: 15.03.1999 SE 9900922; 01.10.1999 US 157333 P; 01.10.1999 SE 9903559
(43) Date of publication of application: 03.04.2002
(73) Proprietor: Philips Digital Mammography Sweden AB, 171 41 Solna (SE)
(72) Inventor: DANIELSSON, Mats, S-182 43 Täby (SE)
(74) Representative: Verweij, Petronella Danielle
(86) International application number: PCT/SE2000/000524
(87) International publication number: WO 2000/055645

(56) References cited:
- EP-A1- 0 229 497
- EP-A1- 0 262 267
- WO-A1-92/02808
- WO-A1-98/04193
- DE-A1- 19 827 022
- GB-A- 2 056 671
- GB-A- 2 240 003
- GB-A- 2 278 765
- US-A- 4 937 453
- US-A- 5 396 072
- US-A- 5 461 653

## Description

### TECHNICAL FIELD OF THE INVENTION

The present invention relates to an arrangement for detecting x-ray radiations comprising a carrying member on one face arranged with detectors consisting of a plurality of sensors provided on a substrate.

The invention also relates to -ray apparatus using such an arrangement and a method of scanning in an x-ray apparatus including such an arrangement.

### BACKGROUND OF THE INVENTION

The usual systems for X-ray imaging consist of an X-ray source and an area detector placed behind the object to register the image. The main drawback with this set-up is its sensitivity to background noise in form of Compton scattered radiation. Existing methods to remove this background are inefficient and also remove a fraction of the primary X-rays that contains the image information. This results in a dose increase that can be as high as a factor 3.

One way around this problem is a scanned-slot set up. A pre collimator slot before the object shapes the X-ray beam to match the active detector area. The slot is moved mechanically to image the whole object. It is also possible to have the object moving with respect to the slot, this is however usually more inconvenient because the object is usually heavier than the mechanics for the slot. Since only a narrow fan-beam is crossing the object at any single time, the amount of Compton scattered X-rays is minimized. Another advantage with the scanned-slot approach is that the required detector area is much smaller, this cuts cost and also enables the use of more expensive and efficient detector materials if desired.

A drawback with the scanned-slot geometry is that only a small fraction of the X-rays from the source is actually used to form the image. As a result, the time for image acquisition is extended and the X-ray tube need to be turned on for a longer period of time. A way of mitigating this problem and achieving a practical system is to use a multi slot collimator with different detector arrays under each slot. This however makes the image acquisition non-trivial since the information from the different detectors has to be combined together into one image without any visible artifacts such as boarder lines between areas where different detectors were used.

### PRIOR ART

US 5,461,653 describes a filmless X-ray imaging system including at least one X-ray source, upper and lower collimators, and a solid-state detector array, and can provide three-dimensional imaging capability. The X-ray source plane is distance z1 above upper collimator plane, distance z2 above the lower collimator plane, and distance z3 above the plane of the detector array. The object to be X-rayed is located between the upper and lower collimator planes. The upper and lower collimators and the detector array are moved horizontally with scanning velocities v1, v2, v3 proportional to z1, z2 and z3, respectively. The pattern and size of openings in the collimators, and between detector positions is proportional such that similar triangles are always defined relative to the location of the X-ray source. X-rays that pass through openings in the upper collimator will always pass through corresponding and similar openings in the lower collimator, and thence to a corresponding detector in the underlying detector array. Substantially 100% of the X-rays irradiating the object (and neither absorbed nor scattered) pass through the lower collimator openings and are detected, which promotes enhanced sensitivity. A computer system coordinates repositioning of the collimators and detector array, and X-ray source locations. The computer system can store detector array output, and can associate a known X-ray source location with detector array output data, to provide three-dimensional imaging. Detector output may be viewed instantly, stored digitally, and/or transmitted electronically for image viewing at a remote site.

A method and apparatus for detecting x-ray radiation in a radiographic imaging context using so-called "edge-on" detectors are disclosed in US 4,937,453 (in the following referred to as patent '453). It is particularly useful in conjunction with slit and slot scan radiography. In accordance with this invention, detectors are constructed and arranged such that substantially all of the energy from an X-ray to be detected is discharged in the detector. In this way a detector is provided which provides a direct electronic read out, high X-ray stopping power and high spatial resolution while obtaining good signal collection efficiency without the use of excessively high voltage levels. In the preferred embodiment, solid state x-ray detectors are constructed such that the thickness of the detector along the direction of incident x-rays is long enough that substantially all of the x-ray energy is discharged in the detector.

The pending European patent application No. 00915678.7 refers to a method of obtaining improved radiographic images consisting of orienting a semiconductor radiation detector. The orienting step comprises a selection of an acute angels between the direction of incident radiation and a side of the detector such that the incident radiation mainly hits the side.

GB2278765 discloses an imaging arrangement, such as a radiological system, wherein an X-ray source is moved relative to an object to be irradiated simultaneously with a sensor array. The sensor array comprises a plurality of sensors (4, 6) which are arranged such that adjacent sensors overlap in the scan direction.

WO98/04193 A describes an X-ray scanning system having an X-ray source and an X-ray detector assembly, including a plurality of X-ray detector crystals grouped in substantially linear arrays (34) and cooperative with the X-ray source, a substantially continuous radiation detection zone is established by positioning the detector arrays so that substantially all radiation from the source passing through the detector assembly passes through at least a portion of at least one detector crystal. The detector arrays are tilted at a preselected angle alpha with respect to a nominally perpendicular orientation relative to radial lines (42) extending from the focal spot.

### Summary of invention

The main object of the present invention is to overcome the problems stated above and present a method to solve the problem of acquiring a high quality image without artifacts using, a single or multi-slot detector system.

Another object of the present invention is to provide an X-ray apparatus for detecting x-ray radiations in the form of incident X-rays, that simplifies the image scanning and acquisition in an x-ray imaging system.

A particular advantage of the present invention is the robustness of the system with respect to non-functioning, so called dead, channels and the low sensitivity to deterioration of spatial resolution due to motion in the object.

According to one embodiment, the system comprising
a X-ray source (501) for providing said incident X-rays having a field of view;
a collimator (502);
an essentially planar beam directing member (503, 510) of a material non-transparent to X-rays, having an elongated slot (401 a, 401 b) formed therein;
a detector system comprising a carrying member (1 10), which comprises at least on one side (111) detectors (130, 130a, 1 30b, 630), said detectors comprising a plurality of sensors (132) arranged on a substrate (131), each detector having an active section and an inactive section,
wherein said inactive section comprises a guard ring (133) and an edge portion (134), that said detectors (130, 130a, 130b, 630) are arranged substantially edge to edge and side by side in at least two rows, a first and a second row on at least said one side of said carrying member, that said detectors on said first row are arranged displaced relative to said detectors in said second row such that an inactive section (133,134) on one detector in said first row is 20 overlapped with an active section of a detector in said second row, and that said plurality of sensors (132) are arranged in a sensor plane and that said carrying member (110) is tilted to arrange said sensor plane at an angle (a) with respect to said incident X-rays.

According to one embodiment, said detector system further comprises a supporting member (201) supporting said detectors.

According to one embodiment, said detectors consist of one of a scintillator optically connected to a CCD, silicon diodes, a gaseous detector.

According to one embodiment, said X-ray apparatus comprising:
- said detectors (504) arranged in a at least a first and a second row provided in communication with said slots and arranged to detect said incident X-rays and for providing a signal representing the intensity of said X-rays impinging thereon, and
- means for moving said essentially beam directing member (503, 510) and an object (507) to be examined relative each other

According to one embodiment, said apparatus comprising means to acquire data from said detectors (504) arranged in a at least a first and a second row at intervals corresponding to a fraction of the width of said sensors.

According to one embodiment, said essentially planar beam directing member (503,510) is arranged with slots (401a) in at least two rows, wherein each slots in each row are displaced relative to each other.

According to one embodiment, said essentially planar beam directing member is a refracting or focusing member.

According to one embodiment, wherein a method for scanning in an apparatus comprises the steps:
- First, arranging a first part of said essentially planar beam directing member (510) in a field of view while the second part of the essentially planar beam directing member is outside the field of view,
- Thereafter, starting the scan from a first position wherein said essentially planar beam directing member has detectors having a first speed,
- bringing the said essentially planar beam directing member and detectors to a maximum, substantially constant speed when the entire essentially planar beam directing member and all detectors are in the field of view, and
- when the first part of said essentially planar beam directing member is outside the field of view, bringing said essentially planar beam directing member and detectors to a third speed.

According to one embodiment, wherein the method comprises the further step of stopping the scan when said second part of the essentially planar beam directing member is outside the field of view.

According to one embodiment, wherein the method comprises that the scan is continuous and that readout of data is performed at intervals corresponding to a fraction of the width of said sensors.

According to one embodiment, wherein the method comprises that the read-out data for each increment and for each detector system are stored as data arrays, that the stored data for each detector system are separately combined to form an image, and that images obtained by detector system are superposed to form a final image.

### BRIEF DESCRIPTION OF THE DRAWINGS

In the following, the invention will be further described in a non-limiting way with reference to the accompanying drawings in which:
- Fig. 1: is a schematic frontal view of a detector assembly according to the invention;
- Figs. 2a; 2b: are cross-sections along line II-II in fig 1, showing two alternative embodiments;
- Figs. 3a; 3b: are enlargements of the encircled area in fig. 1, showing two alternative embodiments;
- Figs. 4a; 4b: illustrate two alternative embodiments of a collimator;
- Fig. 5: shows a first embodiment of an x-ray imaging apparatus in a schematic way,
- Fig. 6: shows a second embodiment of the detector assembly according to the invention in a schematic way, and
- Fig. 7: is a schematic top view of a collimator corresponding to the embodiment of fig. 6.

### DETAILED DESCRIPTION OF THE EMBODIMENTS

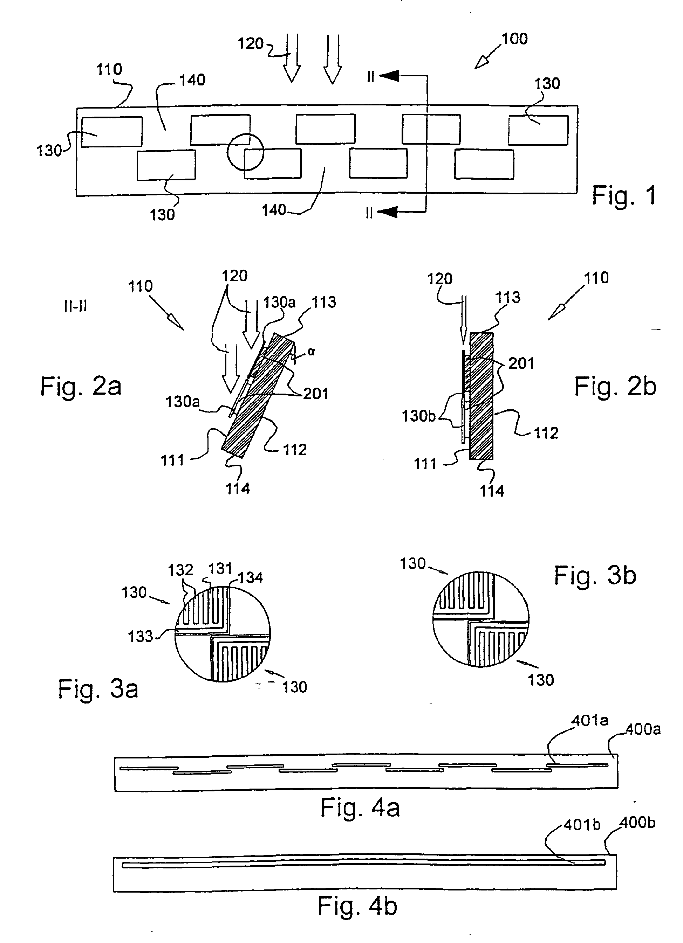

A preferred embodiment of an detector arrangement 100 for detecting X-ray radiations 120 is illustrated in figs. 1, 2a and 2b. The detector arrangement 100 comprises a carrying member 110, on which a number of detectors 130, as described in above patent Application 00915678.7 (incorporated herein through reference) or Patent >453 are arranged.

The carrying member 110 is a substantially rectangular piece made of suitable material. The carrying member 110 is a standard printed circuit board available from a multitude of manufacturers or it could be a ceramic of similar type as used to carry the chips in Multi Chip Modules. Its important that the carrying member is mechanically stable and that the expansion with temperature is similar in magnitude to the expansion of the detectors (silicon chips) attached to its surface. The carrying member has a first side 111 and a second side 112, a first end 113 and a second end 114. The first side is arranged with supporting members 201 for supporting edge-on arranged detectors 130a and 130b. The detectors 130 are arranged spaced apart in two rows in the transverse direction of the carrying member. The space 140 corresponds substantially to the length of a detector 130. The detectors in each row are displaced relative each other such that a space in a row corresponds to a detector in the other row. The space between the detector edges at each row, i.e. the space between the bottom edge of an upper detector and top edge of the lower detector, is so provided that a substantially continuous detector surface is provided.

Detectors 130a in fig. 2a refer to detectors according to Application 00915678.7 and detectors 130b in fig. 2b refer to detectors according to Patent >453. In fig. 2a the detectors 130a are tilted in an acute angel α by tilting the carrying member 110, whereby the radiation incide onto a surface of the detectors incorporating sensors in the acute angle α. The detectors may also be tilted by tilting the supporting members 201 or using biased detector substrates. The supporting members may also comprise of an adhesive agent for adhering the detectors onto the carrying member. Although, rectangular shaped detectors are illustrated, it is obvious that the detectors having other shapes can also be engaged.

In the embodiment according to fig. 2b, the detectors 130b are arranged in parallel to the incident X-rays 120 whereby the rays hit the top edges of the detectors as described in Patent >453.

The reason for displacement of the detectors relative each other in each row is that the edges of each detector is provided with a dead zone and a so-called guard ring. The encircled corner sections of two detectors 130 are illustrated enlarged in figs. 3a and 3b. Each detector 130 comprises semiconductive substrate 131 on which a number of strips of pixel sensors 132 on a front side of the detector. The edge of the detector comprise a guard ring 133 an a dead area 134. The dead 134 area corresponds approximately to the distance from the edge of the detector to a point in between the guard ring and where the strips of the sensors 132 begin. Each pixel sensor 132 is connected to electronics of an x-ray imaging apparatus through not shown pads or contacts.

According to fig. 3a the detectors 130 are arranged with the active areas, i.e. the area within the guard rings, and more specifically between the guard rings and the adjacent pixel sensors, substantially edge to edge. In the illustrated case, a pixel sensor 132 in a detector of a first line is aligned to a guard ring section of a detector in the second line. Consequently, when processing the signals from the detectors the guard rings and dead areas will not effect the output.

According to the embodiment of fig. 3b, the active areas. The active area of each detector is axially displaced so much that even the pixel sensors overlap. The overlapping may approximately be by 20-150 µm, to allow for possible misalignments.

Figs. 4a and 4b show top views of two collimators 400a and 400b. Collimators are used to shape the incident x-ray beam to match the detecting area on a detector. The collimator 400a corresponds to the detector arrangement according to embodiment of fig. 2a and the collimator 400b to the detector arrangement according to embodiment of fig. 2b. The collimators comprises slots 401a and 401b, respectively. The slots 401a, in fig. 4a are arranged displaced relative each other corresponding to the configuration of the detectors in fig. 2a. The slot 401b in fig. 4b is an oblong slot substantially covering all detectors 130b.

A good material for collimators is Tungsten since it has a high stopping power and very small scattering probability for the X-rays. The collimators could also be made of other heavy metals such as copper, stainless steel, lead or the like.

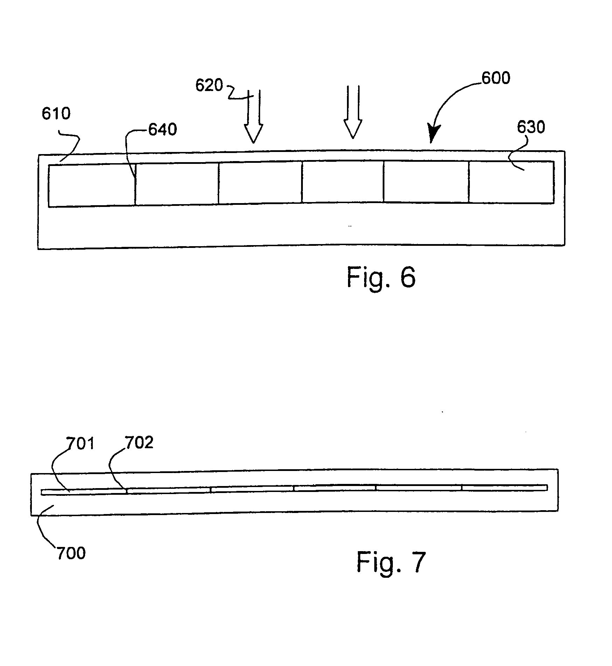

It is also possible to arrange the detectors 630 in one substantially straight row as shown in the detector arrangement 600 of fig. 6. The detectors are arranged side by side and edge to edge and the only effective space 640 is provided by the dead area. The entire detector arrangement 600 can be tilted or arranged substantially perpendicular (to the plane of movement) according to the embodiments of figs. 2a and 2b. A corresponding collimator 700 is illustrated in fig. 7. The slots 701 of the collimator are delimited from each other by means of walls 702 corresponding essentially to the "space" 640.

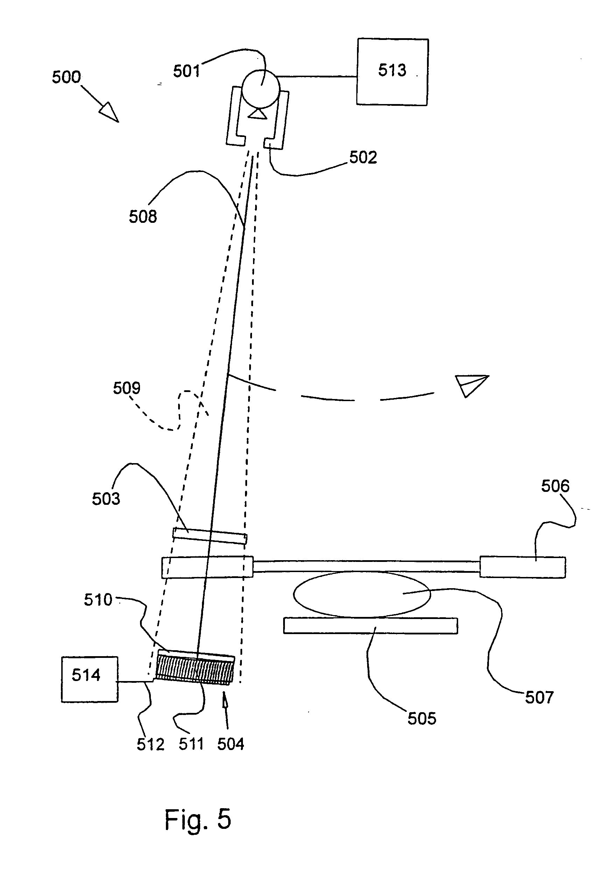

A preferred embodiment of an x-ray imaging apparatus 500, preferably but not exclusively for mammography is illustrated in fig. 5. 501 denotes an X-ray source, 502 is a first rough collimator, 503 a second collimator, 504 is a detector array comprising a plurality of detector arrangements, 505 and 506 are lower upper holders, respectively, both transparent to x-rays; 507 is an object to be examined and 508 a support. The field of view between beams is denoted with 509 and also illustrated with dotted lines. The X-ray object 507 for mammography is the female breast and this is compressed according to the standard technique using compression holders 505 and 506, the ends of the latter being arranged with x-ray blocking material. A second collimator 510 is also provided, the slots of which are matched to the collimator 503 above so that the X-rays coming straight from the source, without deflections, and pass collimator 503 will also pass collimator 510. After the collimator 510, the sensor arrangement comprising an array of detectors 511 is placed under each slot in such a way that all X-rays coming straight from the source without deflections that pass collimator 503 and pass collimator 510 will also hit the detector arrays beneath the slots and are registered by dedicated electronics. In this case detector arrangements according to fig. 2a are used and arranged in parallel on a carrier with their longitudinal axis directed towards the plane of the drawing. The collimators503 and 510 are placed on a mechanical support 508 together with the detector arrays 504. This support is connected to an accurate linear stage that can move the slots relative to the object. The scanning path is illustrated with dashed arrow. The stage is computer 513 controlled and equipped with an accurate position reading. While the slots are moving data from the detector arrays are read out, through connections 512 together with the present coordinate according to the position reading. From this information the image is reconstructed. Although the scanning path illustrated here is a reciprocating movement due to the circular symmetry of the radiation of the x-ray source, the radiation path can be arranged with refractive means to refract the beam into a plane parallel with the plane of the holders, whereby a linear movement of the collimators and detectors will be needed. Moreover, due to the circular radiation, the detectors are arranged in substantially circular carrier, which in case of a linear movement should be arranged in a flat carrier.

The field of view, i.e. the area where its possible to image an object with a scan is defined by the ends of upper holder 506 that is equipped with blocking material. It is possible to attach a collimator to holder 506. However, it is not preferred to attach the collimator to the compression holder since they need to be light and easy to handle. The blocking material should be moved to above the compression holder and rest on its own support.

The detector arrays and electronics could for example consist of a scintillator optically connected to a CCD. The sensor arrays could also be made of silicon diodes and a dedicated electronic circuit could count each X-ray. It would also be possible to use a gaseous detector, such as a Parallel Plate Chamber where the gas volume is oriented edge-on to the incident X-rays and the pulses induced by the X-rays in the gas can be counted by a dedicated electronic circuit. To prevent scattered X-rays from one detector array reaching neighboring detector arrays an absorbing plate such as a thin Copper plate can be inserted between each of the slots. The electronic circuit is connected to a computer unit 514 where the data is transferred for manipulation, corrections and display.

Obviously, one or several of collimators can be substituted by refractive or focusing mens.

A preferred scanning method according to the invention is performed as follows: Before the scanning start at least a first part of the collimator 510, e.g. 2/3 of the total number of the collimators are in the field of view while the second part, e.g. 1/3, of the collimators are outside the field of view. The scan is started from a first position, e.g. at zero speed, and reaches a maximum substantially constant speed when all collimators and detectors are in the field of view. When the first collimator is outside the field of view the scan is slowed down and stops when said second part of the collimators are outside the field of view. The acceleration time before the scan reaches the maximum speed and the deceleration time before it stops is determined in such a way that the parts of the image where the acceleration and retardation takes place obtains the same photon statistics as the rest of the image.

With this method, it might be technically more difficult to reconstruct the image but from a practical point of view, but experiments have shown that it is important not to have to much of dead area in this direction since the detector in the case of mammography should go all the way up to the armpit of the patient. If there is mm between each line of detectors and 30 lines and assuming that 2/3 of the detectors is outside the field of view when starting the scan the dead area will only extend 10 mm.

According to another method, before the scan starts all slots of the collimator 510 are placed substantially outside the field of view. After the scan starts it should have reached a constant speed before the first pair of slots (503 and 510) enters the field of view. During the scan, the data containing information about the number of X-rays hitting the detector is read out as frequently as possible. The data for one read out will consist of a vector of numbers representing the X-ray flux in each of the pixels of the sensor array and this vector will be stored. When the scan is finished the image resulting from one array of vectors will consist of a matrix of all the vectors from the individual readouts.

If there is mm between each line of detectors and 30 lines 30 mm of dead area will be obtained according to this method.

To be more specific about the read out rate, following example is given, assuming that the width of the sensors is 50-µm. In this case the data is preferably read out at least every 25-µm corresponding to half the width of the array. This is to sampling according to the well known Nyquist frequency, which prevent any large loss of information due to sampling in to large steps. It would also prevent artifacts due to aliasing. It is also possible to sample more frequently than this. Sampling steps should not exceed 50-µm, i.e. the width of the array, since in this case the image for a certain array will be incomplete. Generally, one would like to readout data in time intervals more frequent than it takes for the slots to move a distance equal to half the size of the sensor arrays.

The scan should continue until substantially all slots have passed the field of view. There will now be information enough to create one image for the data coming from the sensor arrays for each of the slots. If there are N slots, N images are then obtained and the overall image is formed as the superposition of all said images. This is a straightforward operation and only involves simple superposition of images and there is no need to seem several sub-images together. Dead individual sensors could simply be corrected for since information at this image point also exists in sensors at adjacent slots. The sensor arrays in the different slots could be slightly offset with respect to each other in order to avoid aliasing and sample according to the Nyquist criteria also in the dimension perpendicular to the scan direction.

The system will only be sensitive to motion in the object in a time frame defined by the time it takes the slots to move corresponding to the distance between the first and the last slot. This time Is usually considerably less than the total scan time.

The invention is not limited the shown embodiments but can be varied in a number of ways without departing from the scope of the appended claims and the arrangement and the method can be implemented in various ways depending on application, functional units, needs and requirements etc. For example a combination of arrangements could also be provided.

## Claims

1. An X-ray apparatus (500) for detecting x-ray radiations in the form of incident X-rays, said system comprising
a X-ray source (501) for providing said incident X-rays having a field of view;
a collimator (502);
an essentially planar beam directing member (503, 510) of a material non-transparent to X-rays, having an elongated slot (401 a, 401 b) formed therein;
a detector system comprising a carrying member (110), which comprises at least on one side (111) detectors (130, 130a, 130b, 630), said detectors comprising a plurality of sensors (132) arranged on a substrate (131), each detector having an active section and an inactive section,
**characterized in**
**that** said inactive section comprises a guard ring (133) and an edge portion (134), that said detectors (130, 130a, 130b, 630) are arranged substantially edge to edge and side by side in at least two rows, a first and a second row on at least said one side of said carrying member, that said detectors on said first row are arranged displaced relative to said detectors in said second row such that an inactive section (133,134) on one detector in said first row is overlapped with an active section of a detector in said second row, and that said plurality of sensors (132) are arranged in a sensor plane and that said carrying member (110) is tilted to arrange said sensor plane at an angle (a) with respect to said incident X-rays.

2. The X-ray apparatus according to claim 1, **characterized in that** said detector system further comprises a supporting member (201) supporting said detectors.

3. The X-ray apparatus according to any of previous claims,
**characterized in**
**that** the detectors consist of one of a scintillator optically connected to a CCD, silicon diodes, a gaseous detector.

4. The X-ray apparatus (500) according to claim 1, said X-ray apparatus comprising:
● said detectors (504) arranged in a at least a first and a second row provided in communication with said slots and arranged to detect said incident X-rays and for providing a signal representing the intensity of said X-rays impinging thereon, and
● means for moving said essentially beam directing member (503, 510) and an object (507) to be examined relative each other

5. The apparatus according to claim 4, further comprising means to acquire data from said detectors (504) arranged in at least a first and a second row at intervals corresponding to a fraction of the width of said sensors.

6. The apparatus according to anyone of claims 4 -5,
**characterized in**
**that** said essentially planar beam directing member (503,510) is arranged with slots (401a) in at least two rows, wherein each slots in each row are displaced relative to each other.

7. The apparatus according to anyone of claims 4 - 6,
**characterized in**
**that** said essentially planar beam directing member is a refracting or focusing member.

8. A method for scanning in an apparatus according to any of claims 4 - 7, **characterized by**
● First, arranging a first part of said essentially planar beam directing member (510) in a field of view while the second part of the essentially planar beam directing member is outside the field of view,
● Thereafter, starting the scan from a first position wherein said essentially planar beam directing member has detectors having a first speed,
● bringing the said essentially planar beam directing member and detectors to a maximum, substantially constant speed when the entire essentially planar beam directing member and all detectors are in the field of view, and
● when the first part of said essentially planar beam directing member is outside the field of view, bringing said essentially planar beam directing member and detectors to a third speed.

9. The method according to claim 8,
**characterized by** the further step of stopping the scan when said second part of the essentially planar beam directing member is outside the field of view.

10. The method according to claim 9,
**characterized in**
**that** the scan is continuous and that readout of data is performed at intervals corresponding to a fraction of the width of said sensors.

11. The method as claimed in any of claims 10,
**characterized in**
**that** the read-out data for each increment and for each detector system are stored as data arrays, that the stored data for each detector system are separately combined to form an image, and that images obtained by detector system are superposed to form a final image.

## Patentansprüche

1. Röntgengerät (500) zum Detektieren von Röntgenstrahlung in Form von einfallenden Röntgenstrahlen, wobei das genannte System Folgendes umfasst:
eine Röntgenquelle (501) zum Aussenden der genannten einfallenden Röntgenstrahlen mit einem Sichtfeld,
einen Kollimator (502),
ein im Wesentlichen ebenes Strahllenkungselement (503, 510) aus einem für Röntgenstrahlen undurchlässigen Material mit einem darin ausgebildeten länglichen Schlitz (401a, 401b),
ein Detektorsystem mit einem Träger (110), der zumindest auf einer Seite (111) die Detektoren (130, 130a, 130b, 630) umfasst, wobei die genannten Detektoren eine Vielzahl von Sensoren (132) umfassen, die auf einem Substrat (131) angeordnet sind, wobei jeder Detektor einen aktiven Abschnitt und einen inaktiven Abschnitt aufweist,
**dadurch gekennzeichnet, dass**
der genannte inaktive Abschnitt einen Schutzring (133) und einen Randbereich (134) umfasst,
die genannten Detektoren (130, 130a, 130b, 630) im Wesentlichen Kante an Kante und nebeneinander in zumindest zwei Reihen angeordnet sind, eine erste und eine zweite Reihe auf zumindest der genannten einen Seite des genannten Trägers,
die genannten Detektoren in der genannten ersten Reihe in Bezug auf die genannten Detektoren in der genannten zweiten Reihe derart versetzt angeordnet sind, dass ein inaktiver Abschnitt (133, 134) auf einem Detektor in der genannten ersten Reihe von einem aktiven Abschnitt eines Detektors in der genannten zweiten Reihe überlappt wird, und
die genannte Vielzahl von Sensoren (132) in einer Sensorebene angeordnet sind und der genannte Träger (110) geneigt ist, so dass die genannte Sensorebene unter einem Winkel (a) zu den genannten einfallenden Röntgenstrahlen angeordnet ist.

2. Röntgengerät nach Anspruch 1, **dadurch gekennzeichnet, dass** das genannte Detektorsystem ferner eine Halterung (201) aufweist, die die genannten Detektoren aufnimmt.

3. Röntgengerät nach einem der vorhergehenden Ansprüche,
**dadurch gekennzeichnet, dass**
die Detektoren entweder aus einem optisch mit einem CCD-Sensor gekoppelten Szintillator, Siliziumdioden oder einem gasförmigen Detektor bestehen.

4. Röntgengerät (500) nach Anspruch 1, wobei das genannte Röntgengerät Folgendes umfasst:
- die genannten Detektoren (504), die in zumindest einer ersten und einer zweiten Reihe angeordnet sind, die in Verbindung mit den genannten Schlitzen stehen und so angeordnet sind, dass sie die genannten einfallenden Röntgenstrahlen detektieren und ein Signal liefern, das die Intensität der genannten auf sie treffenden Röntgenstrahlen darstellt, und
- Mittel zum Bewegen des genannten im Wesentlichen ebenen Strahllenkungselements (503, 510) und eines zu untersuchenden Objekts (507) in Bezug zueinander.

5. Gerät nach Anspruch 4, das ferner Mittel zum Erfassen von Daten von den genannten Detektoren (504) umfasst, die in zumindest einer ersten und einer zweiten Reihe in Abständen angeordnet sind, die einem Bruchteil der Breite der genannten Sensoren entsprechen.

6. Gerät nach einem der Ansprüche 4 - 5, **dadurch gekennzeichnet, dass** das im Wesentlichen ebene Strahllenkungselement (503, 510) mit Schlitzen (401a) in zumindest zwei Reihen ausgelegt ist, wobei die Schlitze in jeder Reihe in Bezug zueinander versetzt sind.

7. Gerät nach einem der Ansprüche 4 - 6, **dadurch gekennzeichnet, dass** das im Wesentlichen ebene Strahllenkungselement ein Brechungs- oder Fokussierelement ist.

8. Abtastverfahren in einem Gerät nach einem der Ansprüche 4 - 7,
**dadurch gekennzeichnet, dass**
- zuerst ein erstes Teil des genannten, im Wesentlichen ebenen Strahllenkungselements (510) in einem Sichtfeld positioniert wird, während sich der zweite Teil des im Wesentlichen ebenen Strahllenkungselements außerhalb des Sichtfelds befindet,
- anschließend die Abtastung ausgehend von einer ersten Position beginnt, wobei das genannte, im Wesentlichen ebene Strahllenkungselement Detektoren mit einer ersten Geschwindigkeit aufweist,
- das genannte, im Wesentlichen ebene Strahllenkungselement und die Detektoren auf eine maximale, im Wesentlichen konstante Geschwindigkeit gebracht werden, wenn sich das gesamte, im Wesentlichen ebene Strahllenkungselement und alle Detektoren in dem Sichtfeld befinden, und
- wenn sich der erste Teil des genannten, im Wesentlichen ebenen Strahllenkungselements außerhalb des Sichtfeldes befindet, das genannte, im Wesentlichen ebene Strahllenkungselement und die Detektoren auf eine dritte Geschwindigkeit gebracht werden.

9. Verfahren nach Anspruch 8, **dadurch gekennzeichnet, dass** es den weiteren Schritt des Anhaltens der Abtastung umfasst, wenn sich der genannte zweite Teil des im Wesentlichen ebenen Strahllenkungselements außerhalb des Sichtfeldes befindet.

10. Verfahren nach Anspruch 9, **dadurch gekennzeichnet, dass** die Abtastung kontinuierlich und das Auslesen von Daten in Intervallen erfolgt, die einem Bruchteil der Breite der genannten Sensoren entspricht.

11. Verfahren nach Anspruch 10, **dadurch gekennzeichnet, dass** die ausgelesenen Daten für jeden inkrementellen Schritt und für jedes Detektorsystem als Datenfelder gespeichert werden, die gespeicherten Daten für jedes Detektorsystem zur Erstellung eines Bildes getrennt kombiniert werden und von dem Detektorsystem erzielte Bilder zur Erstellung eines endgültigen Bildes überlagert werden.

## Revendications

1. Appareil de radiographie (500) pour détecter des rayons X sous forme de rayons X incidents, ledit système comprenant :
une source de rayons X (501) pour fournir lesdits rayons X incidents possédant un champ de vue ;
un collimateur (502) ;
un élément directeur de faisceau essentiellement plan (503, 510) d'un matériau non transparent aux rayons X, possédant une fente allongée (401a, 401b) formée dans celui-ci ;
un système de détecteurs comprenant un élément porteur (110), qui comprend, au moins sur un premier côté (111), des détecteurs (130, 130a, 130b, 630), lesdits détecteurs comprenant une pluralité de capteurs (132) agencés sur un substrat (131), chaque détecteur possédant une section active et une section inactive,
**caractérisé en ce**
**que** ladite section inactive comprend un anneau de garde (133) et une partie bord (134), que lesdits détecteurs (130, 130a, 130b, 630) sont agencés sensiblement bord à bord et côte à côte dans au moins deux rangées, une première et une seconde rangée sur au moins ledit premier côté dudit élément porteur, que lesdits détecteurs sur ladite première rangée sont agencés de façon déplacée par rapport auxdits détecteurs dans ladite seconde rangée de sorte qu'une section inactive (133,134) sur un détecteur dans ladite première rangée chevauche une section active d'un détecteur dans ladite seconde rangée, et que ladite pluralité de capteurs (132) sont agencés dans un plan de capteur et que ledit élément porteur (110) est incliné pour agencer ledit plan de capteur à un angle (a) par rapport auxdits rayons X incidents.

2. Appareil de radiographie selon la revendication 1, **caractérisé en ce que** ledit système de détecteurs comprend en outre un élément de support (201) supportant lesdits détecteurs.

3. Appareil de radiographie selon une quelconque des revendications précédentes, **caractérisé en ce que** les détecteurs sont constitués d'un parmi un scintillateur optiquement connecté à un CCD, des diodes au silicium, un détecteur gazeux.

4. Appareil de radiographie (500) selon la revendication 1, ledit appareil de radiographie comprenant :
- lesdits détecteurs (504) agencés en au moins une première et une seconde rangée, prévue en communication avec lesdites fentes, et agencés pour détecter lesdits rayons X incidents et pour fournir un signal représentant l'intensité desdits rayons X incidents sur ceux-ci, et
- des moyens pour déplacer ledit élément directeur de faisceau essentiellement plan (503, 510) et un objet (507) destiné à être examiné l'un par rapport à l'autre.

5. Appareil selon la revendication 4, comprenant en outre des moyens pour acquérir des données à partir desdits détecteurs (504) agencés en au moins une première et une seconde rangée à des intervalles correspondant à une fraction de la largeur desdits capteurs.

6. Appareil selon une quelconque des revendications 4 et 5, **caractérisé en ce que** ledit élément directeur de faisceau essentiellement plan (503, 510) est agencé avec des fentes (401a) en au moins deux rangées, dans lequel les fentes dans chaque rangée sont déplacées les unes par rapport aux autres.

7. Appareil selon une quelconque des revendications 4 à 6, **caractérisé en ce que** ledit élément directeur de faisceau essentiellement plan est un élément réfringent ou concentrateur.

8. Procédé pour le balayage dans un appareil selon une quelconque des revendications 4 à 7, **caractérisé par**
- d'abord, l'agencement d'une première partie dudit élément directeur de faisceau essentiellement plan (510) dans un champ de vue alors que la seconde partie de l'élément directeur de faisceau essentiellement plan est à l'extérieur du champ de vue,
- ensuite, le commencement du balayage à partir d'une première position dans laquelle ledit élément directeur de faisceau essentiellement plan comporte des détecteurs possédant une première vitesse,
- la mise dudit élément directeur de faisceau essentiellement plan et desdits détecteurs à une vitesse maximum sensiblement constante lorsque l'élément directeur de faisceau essentiellement plan entier et tous les détecteurs sont dans le champ de vue, et
- lorsque la première partie dudit élément directeur de faisceau essentiellement plan est à l'extérieur du champ de vue, la mise dudit élément directeur de faisceau essentiellement plan et desdits détecteurs à une troisième vitesse.

9. Procédé selon la revendication 8, **caractérisé par** l'étape supplémentaire d'arrêt du balayage lorsque ladite seconde partie de l'élément directeur de faisceau essentiellement plan est à l'extérieur du champ de vue.

10. Procédé selon la revendication 9, **caractérisé en ce que** le balayage est continu et que la lecture de données est réalisée à des intervalles correspondant à une fraction de la largeur desdits capteurs.
1l. Procédé selon une quelconque des revendications 10, **caractérisé en ce que** les données lues pour chaque incrément et pour chaque système de détecteurs sont stockées sous forme de matrices de données, que les données stockées pour chaque système de détecteurs sont combinées séparément pour former une image, et que des images obtenues par le système de détecteurs sont superposées pour former une image finale.
